# EUROPÄISCHE PATENTANMELDUNG

(11) **EP 1 138 367 A2**
(43) Veröffentlichungstag der Anmeldung: **04.10.2001**
(21) Anmeldenummer: 01107112.3
(22) Anmeldetag: 22.03.2001
(51) Int. Cl.: B01D 53/04, B01D 53/26, F25B 17/08

(54) **Reaktor für eine Kühleinrichtung**

(30) Priorität: 30.03.2000 DE 10015886
(71) Anmelder: H + P Technologie GmbH & Co. Gesellschaft für Kühlsysteme, 97980 Bad Mergentheim (DE)
(72) Erfinder: Patzner, Norbert, 97980 Bad Mergentheim (DE)
(74) Vertreter: Schieferdecker, Lutz, Dipl.-Ing.

(57) **Zusammenfassung**

Die Erfindung betrifft einen Reaktor für eine Kühleinrichtung zu Durchführung eines insbesondere mit Zeolith als Adsorbenz und mit Wasser als Adsorptiv arbeitenden Adsorptions- und Desorptionsprozesses, wobei das Innere eines vakuumdichten Gehäuses mit einem Unterdruckerzeuger und einem Wasser enthaltenden Behälter verbindbar ist und eine Heizeinrichtung sowie eine verschließbare Auslassöffnung für Wasserdampf aufweist.

Der Kern der Erfindung besteht darin, dass mindestens ein den Zeolith enthaltender Innenbehälter vorgesehen ist und eine Behälterwand aufweist, die für Luft und Wasserdampf durchlässig ist und dass mindestens eine Heizeinrichtung im Inneren des Innenbehälter angeordnet ist.

## Beschreibung

Die Erfindung betrifft einen Reaktor für eine Kühleinrichtung zur Durchführung eines Adsorptions - und Desorptionsprozesses mit den Merkmalen des Oberbegriffes von Anspruch 1, wobei das beteiligte Stoffpaar vorzugsweise aus Zeolith und Wasser besteht. Der Zeolith adsorbiert aufgrund seiner hygroskopischen Eigenschaften Wasserdampf mit grosser Heftigkeit, so dass - zur Wiederherstellung des physikalischen Gleichgewichts - neuer Wasserdampf entstehen muss. In Folge der der Umgebung entzogenen Verdampfungswärme kühlt sich das Wasser ab und bildet Eis. Während dieses Verfahrens belädt sich der Zeolith (das Adsorbens) mit Wasser (das Adsorbtiv) bis zu einer Sättigungsgrenze. Die Sättigungsgrenze ist erreicht, wenn die Adsorptionsfähigkeit des Zeoliths erschöpft ist. Um diese wieder herzustellen, muss Wärmeenergie dem Zeolith oberhalb eines bestimmten Temperaturbereiches zugeführt werden. So führt die Erwärmung des Zeoliths auf eine Temperatur von ca. 200 bis 250 °C zu einer Austreibung des Wasserdampfes. Der in der Regel granulat- oder kugelförmige Zeolith ist dann wieder hygroskopisch und erneut zur Aufnahme von Wasserdampf bereit, bis sich wieder ein neuer physikalischer Gleichgewichtszustand einstellt.

Wesentlich für einen guten Wirkungsgrad der Kühleinrichtung ist, dass der Zeolith den im Verdampfer sich bildenden Wasserdampf rasch aufnehmen kann und auch wieder schnell abgibt. Die Wasserdampfaufnahme wird unterstützt durch einen möglichst starken Unterdruck (Vakuum) in dem den Zeolith als Packung oder Schüttung enthaltenden Gehäuse vor Beginn des Adsorptionsprozesses.

Der Erfindung liegt die Aufgabe zugrunde, Maßnahmen vorzusehen, mit deren Hilfe eine möglichst grosse Wärmemenge pro Zeiteinheit während der Desorptionsphase auf den Zeolith übertragen werden kann, so dass dieser das adsorbierte Wasser ebenfalls möglichst schnell abgibt (desorbiert).

Zur Lösung dieser Aufgabe sieht die Erfindung vor, dass mindestens ein den Zeolith enthaltender Innenbehälter in dem Gehäuse angeordnet ist und eine Behälterwand aufweist, die für Luft und Wasserdampf durchlässig ist und dass mindestens ein Heizelement im Inneren des Innenbehälters angeordnet ist.

Erfindungsgemäss befindet sich der Zeolith in dem Gehäuse nicht unmittelbar als Schüttung, sondern er ist seinerseits in mindestens einem zusätzlichen Behälter oder Innenbehälter mit einer luft- und wasserdampfdurchlässigen Behälterwand angeordnet. Die wirksame Oberfläche des Zeoliths gegenüber dem Wasserdampf beim Adsorptions- und beim Desorptionsprozess ist dadurch gegenüber einer üblichen Schüttung wesentlich vergrössert, so dass sowohl die Aufnahmefähigkeit des Zeoliths für Wasserdampf als auch die Möglichkeiten zum Austreiben des Wasserdampfes aus dem Zeolith verbessert sind.

In Weiterbildung der Erfindung ist vorgesehen, dass mehrere Innenbehälter mit jeweils luft- und wasserdampfdurchlässiger Behälterwand in dem Gehäuse angeordnet sind. Die Länge dieser Innenbehälter ist im Vergleich zu den Abmessungen ihres Querschnitts möglichst gross. Die Innenbehälter sind etwa zylindrisch oder stabförmig. Auch können sie im Querschnitt polygonförmig sein.

Die Behälterwand der Innenbehälter besteht vorzugsweise aus einem Drahtgeflecht, das die aus Granulat oder Kugeln bestehende Zeolithschüttung sicher zusammenhält.

Weitere Merkmale der Erfindung gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: eine Prinzipskizze einer Kühleinrichtung;
- Fig. 2:: einen Schnitt durch einen Reaktor;
- Fig. 3:: eine Draufsicht auf den Reaktor nach Abnahme seines Deckels;
- Fig. 4:: eine Einzelheit des Reaktors in grösserem Maßstab;
- Fig. 5:: eine Draufsicht auf Wärmeleitelemente und
- Fig. 6:: einen Schnitt durch einige der Wärmeleitelemente längs der Linie VI-VI in Fig. 5.

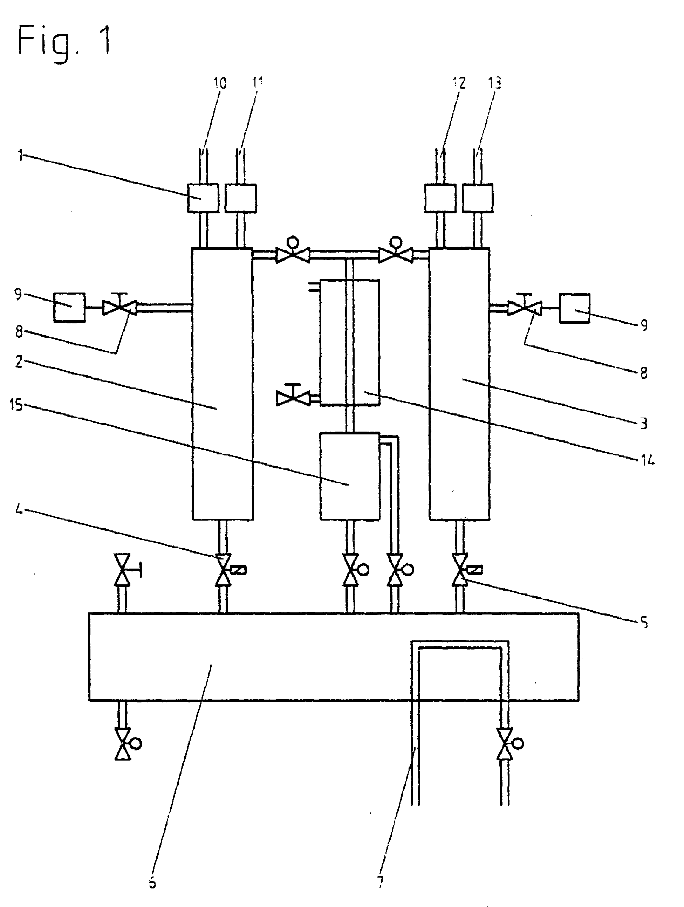

Eine Kühleinrichtung 1 umfasst gemäss Fig. 1 einen ersten, zur Aufnahme von Zeolith dienenden Reaktor 2 und einen zweiten, ebenfalls zur Aufnahme von Zeolith dienenden Reaktor 3, die über Ventile 4 und 5 wahlweise mit einem eine gewisse Menge Wasser enthaltenden Behälter 6 verbunden sind. Zu dem Behälter 6 gehören Teile 7 eines Wärmetauschers, mit dessen Hilfe die in dem Behälter 6 entstehende tiefe Temperatur genutzt wird.

Beide Reaktoren 2 und 3 sind ferner über Ventile 8 an mindestens einen Unterdruckerzeuger 9 angeschlossen. Über zu - und abführende Leitungen 10 und 11 bzw. 12 und 13 können beide Reaktoren 2 und 3 mit der nötigen Wärme für den Desorptionsprozess versorgt werden.

Der hierbei aus dem Zeolith ausgetriebene Wasserdampf gelangt durch eine verschließbare Auslaßöffnung in einen Wärmetauscher 14, um dort zu kondensieren und wird in einem Sammelbehälter 15 als Kondensat gesammelt, ehe dieses wieder in den Behälter 6 gegeben wird.

Im Gegensatz zu einer Kühleinrichtung mit einem einzigen Reaktor gestattet die Kühleinrichtung 1 mit zwei oder mehr Reaktoren einen kontinuierlichen oder nahezu kontinuierlichen Betrieb. Weitere, ebenfalls in Fig. 1 dargestellte Ventile und dergleichen interessieren im Rahmen der Erfindung nicht näher.

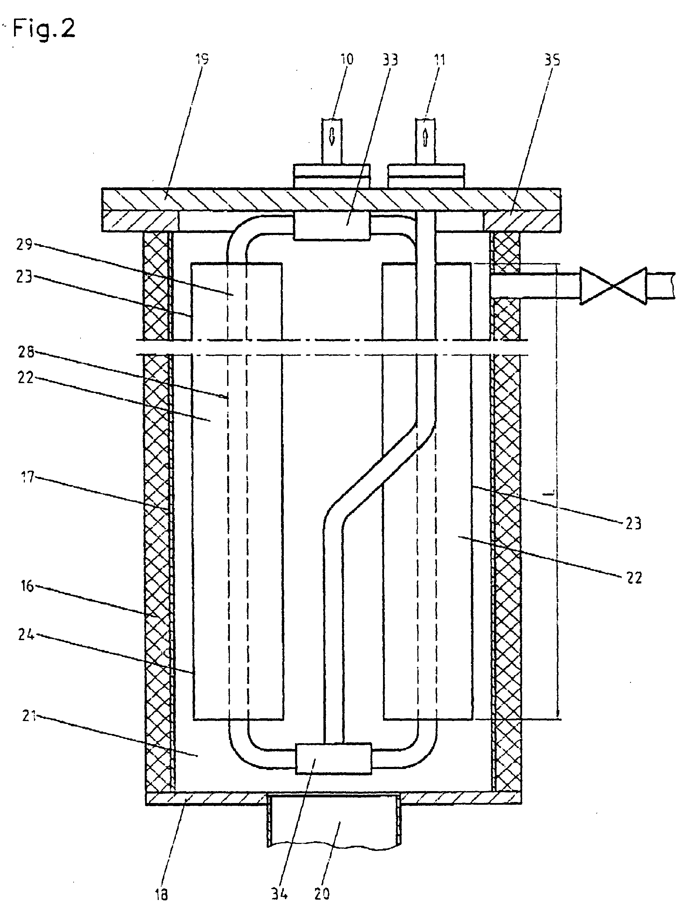

Die beiden Reaktoren 2 und 3 sind im wesentlichen gleichartig gestaltet und umfassen gemäss Fig. 2 ein mit einer Isolierung 16 versehenes Gehäuse 17 mit einem Boden 18 und einem Deckel 19. Der Boden 18 weist eine Ansaugöffnung 20 für den Wasserdampf aus dem Behälter 6 auf.

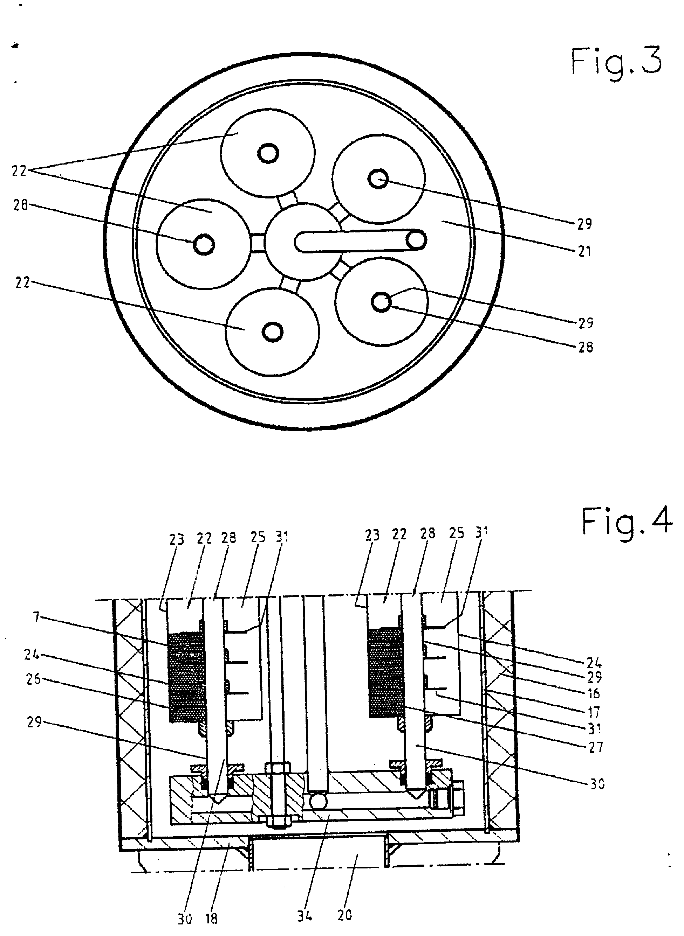

Im Inneren 21 des Gehäuses 17 befinden sich bei dem in den Fig. 2 und 3 dargestellten Ausführungsbeispiel mehrere Zeolith enthaltende Innenbehälter 22. Jeder Innenbehälter 22 besitzt eine Länge L, die im Vergleich zu den Abmessungen seines Querschnittes sehr gross ist und in der Grössenordnung von 1 zu 5 bis 1 zu 10 oder mehr liegen kann.

Aufgrund seiner Abmessungen ist der Innenbehälter 22 stabförmig. Er ist vorzugsweise zylindrisch und kann grundsätzlich im Querschnitt auch polygonförmig sein.

Jeder Innenbehälter 22 weist eine Behälterwand 23 auf, die für Luft und Wasserdampf durchlässig ist. Zweckmäßigerweise besteht die Behälterwand 23 aus einem Drahtgeflecht 24, wie dies in Fig. 4 dargestellt ist.

Im Inneren 25 des/der Innenbehälter 22 befindet sich eine lose Schüttung 26 von granulat - bzw. kugelförmigem Zeolith 27. Ferner sind Heizeinrichtungen 28 im Inneren 25 eines jeden Innenbehälters 22 angeordnet.

Die Heizeinrichtung 28 umfasst einen Heizstab 29, der sich zweckmäßigerweise längs der Achse 30 eines jeden Innenbehälters 22 erstreckt. Der Heizstab 29 kann ein elektrischer Heizstab sein.

Grundsätzlich kann die Heizeinrichtung 28 aber auch ein Heizrohr entsprechend dem Heizstab 29 umfassen, das zur Leitung einer heissen Flüssigkeit- wie zum Beispiel von Thermoöl- längs der Achse 30 des Innenbehälters 22 dient.

Um den Wärmeübergang von dem Heizstab 29 bzw. von dem Heizrohr auf das Zeolith 27 zu fördern, sind Wärmeleitelemente 31 in der aus Zeolith 27 bestehenden Schüttung 26 angeordnet und mit dem Heizstab 29 bzw. mit dem Heizrohr verbunden.

Die Wärmeleitelemente 31 sind rippen- bzw. scheibenförmig.

Grundsätzlich können die Wärmeleitelemente 31 auch aus einem Kupferdrahtgeflecht bestehen, oder sie bestehen aus einem Metallnetzwerk, das den Heizstab 29 umgibt und derart angeordnet ist, dass der Zeolith 27 weitgehend formschlüssig in das Metallnetzwerk eingelagert ist.

Wie Fig. 3 zeigt sind mehrere Innenbehälter 22 in dem Gehäuse 17 jeweils im Abstand voneinander angeordnet. Die Heizstäbe 29 bzw. Heizrohre für die heisse Flüssigkeit/Thermoöl sind entsprechend rotationssymmetrisch angeordnet. Jeweils an den Stirnseiten des Gehäuses 17 sind die Heizrohre mit Hilfe von Kupplungsstücken 33 bzw. 34 möglichst rotationssymmetrisch miteinander und mit den Leitungen 10 und 11 bzw. 12 und 13 verbunden. Die Leitungen 10 und 11 bzw. 12 und 13 dienen als Vorlauf - bzw. als Rücklaufleitung und sind an jeweils einer Stirnfläche 35 des Gehäuses 17 an die in seinem Inneren 21 befindlichen Heizrohre bzw. Kupplungsstücke 33 angeschlossen.

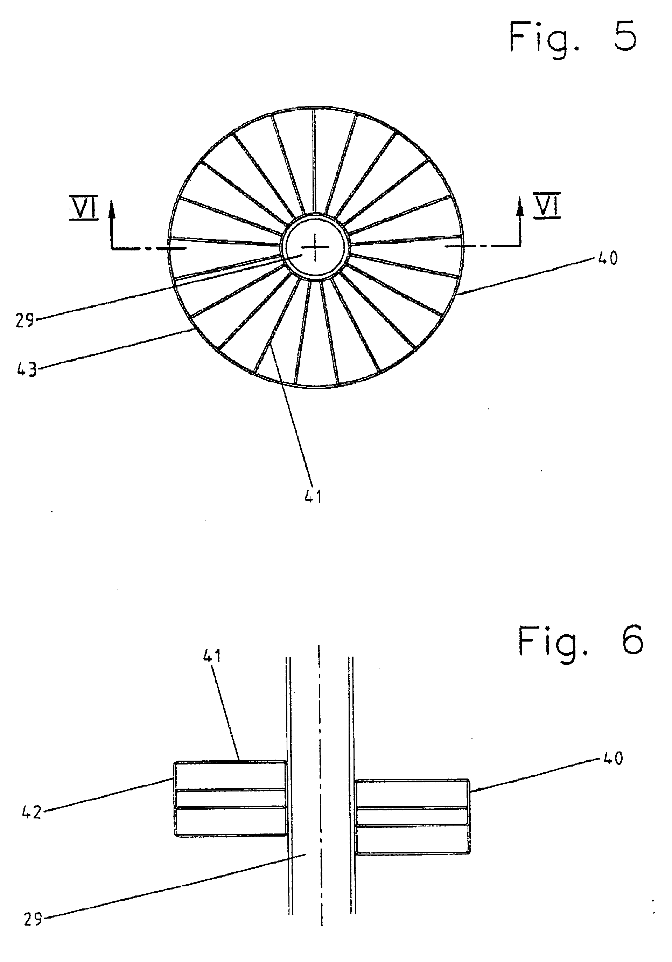

Die beiden Figuren 5 und 6 zeigen schließlich noch ein Wärmeleitelement 40, das formschlüssig einen Heizstab 29 bzw. ein Heizrohr umgibt und sternförmig angeordnete Stäbe 41 umfasst. Die Stäbe 41 sind gemäss Fig. 6 in geringem Abstand übereinander angeordnet und aussen mit Hilfe von Verbindungsstücken 42 miteinander verbunden. Weitere Verbindungsstücke 43 verbinden Stäbe 41 in jeweils einer Ebene, wie Fig. 5 zeigt.

Die Stäbe 41 und die Verbindungsstücke 42 und 43 des Wärmeleitelementes 40 bestehen jeweils aus einem gut wärmeleitenden Werkstoff und sind daher in der Lage, die Wärme von dem Heizstab 29 nach aussen auf dort befindlichen Zeolith abzuführen. Die Abmessungen des Wärmeleitelementes 40 sind dazu an die Abmessungen im Inneren 25 des bzw. der Innenbehälter 22 angepasst.

## Patentansprüche

1. Reaktor für eine Kühleinrichtung (1) zur Durchführung eines Adsorptions - und Desorptionsprozesses, insbesondere mit Zeolith (27) als Adsorbens und mit Wasser als Adsorptiv, wobei das Innere (21) eines vakuumdichten Gehäuses (17) mit einem Unterdruckerzeuger (9) und einem Wasser enthaltenden Behälter (6) verbindbar ist und eine Heizeinrichtung (28) sowie eine verschließbare Auslassöffnung für Wasserdampf aufweist, **dadurch gekennzeichnet,**
**dass** mindestens ein den Zeolith (27) enthaltender Innenbehälter (22) vorgesehen ist und eine Behälterwand (23) aufweist, die für Luft und Wasserdampf durchlässig ist und
**dass** mindestens eine Heizeinrichtung (28) im Inneren (25) des Innenbehälters (22) angeordnet ist.

2. Reaktor nach Anspruch 1, **dadurch gekennzeichnet,**
**dass** mehrere Innenbehälter (22) mit jeweils luft- und wasserdampf- durchlässiger Behälterwand (23) in dem Gehäuse (17) angeordnet sind.

3. Reaktor nach Anspruch 1, **dadurch gekennzeichnet,**
**dass** die Länge (L) des Innenbehälters (22) im Vergleich zu den Abmessungen seines Querschnitts sehr gross ist.

4. Reaktor nach Anspruch 1, **dadurch gekennzeichnet,**
**dass** der Innenbehälter (22) zylindrisch ist.

5. Reaktor nach Anspruch 1, **dadurch gekennzeichnet,**
**dass** der Innenbehälter (22) stabförmig ist.

6. Reaktor nach Anspruch 1, **dadurch gekennzeichnet,**
**dass** der Querschnitt des Innenbehälters (22) polygonförmig ist.

7. Reaktor nach Anspruch 1, **dadurch gekennzeichnet,**
**dass** die Behälterwand (23) aus einem Drahtgeflecht (24) besteht.

8. Reaktor nach Anspruch 1, **dadurch gekennzeichnet,**
**dass** als Heizeinrichtung (28) ein Heizstab (29) vorgesehen und längs der Achse (30) des Innenbehälters (22) angeordnet ist.

9. Reaktor nach Anspruch 1, **dadurch gekennzeichnet,**
**dass** der Heizstab (29) ein elektrischer Heizstab ist.

10. Reaktor nach Anspruch 1, **dadurch gekennzeichnet,**
**dass** der Heizstab (29) ein Heizrohr für eine heisse Flüssigkeit/Thermoöl ist und längs der Achse (30) des Innenbehälters (22) angeordnet ist.

11. Reaktor nach Anspruch 1, **dadurch gekennzeichnet,**
**dass** Wärmeleitelemente (31), (40) in der aus Zeolith (27) bestehenden Schüttung (26) angeordnet und mit der Heizeinrichtung (28) verbunden sind.

12. Reaktor nach Anspruch 1, **dadurch gekennzeichnet,**
**dass** die Wärmeleitelemente (31) rippen- bzw. scheiben-förmig sind.

13. Reaktor nach Anspruch 1, **dadurch gekennzeichnet,**
**dass** das Wärmeleitelement ein Kupferdrahtgeflecht ist.

14. Reaktor nach Anspruch 1, **dadurch gekennzeichnet,**
**dass** als Wärmeleitelement ein Metallnetzwerk vorgesehen ist, das den Heizstab (29) umgibt, und dass der Zeolith (27) weitgehend formschlüssig in das Metallnetzwerk eingelagert ist.

15. Reaktor nach Anspruch 1, **dadurch gekennzeichnet,**
**dass** die Heizstäbe (29)/Heizrohre für die heisse Flüssigkeit/ Thermoöl rotationssymmetrisch angeordnet sind.

16. Reaktor nach Anspruch 1, **dadurch gekennzeichnet,**
**dass** Leitungen (10, 11) bzw. (12, 13) als Vorlaufleitung bzw. als Rücklaufleitung für heisse Flüssigkeit/Thermoöl an einer Stirnseite (35) des Gehäuses (17) angeordnet sind.
